# FASCICULE DE BREVET EUROPEEN

(11) **EP 1 343 673 B1**
(45) Date de publication et mention de la délivrance du brevet: **27.02.2008**
(21) Numéro de dépôt: 01998466.5
(22) Date de dépôt: 26.11.2001
(51) Int. Cl.: B60T 13/573, B60T 13/565

(54) **DISPOSITIF DE FREINAGE ASSISTE POUR VEHICULE A MOTEUR**
UNTERSTÜTZTES BREMSSYSTEM FÜR KRAFTFAHRZEUG
BRAKE BOOSTER DEVICE FOR MOTOR VEHICLE

(30) Priorité: 29.11.2000 FR 0015543
(43) Date de publication de la demande: 17.09.2003
(73) Titulaire: ROBERT BOSCH GMBH, 70442 Stuttgart (DE)
(72) Inventeur: MICHON, Jean-Pierre, F-77178 SAINT-PATHUS (FR); LACROIX, Stéphane, F-77220 TOURNAN EN BRIE (FR)
(74) Mandataire: Hurwic, Aleksander Wiktor
(86) Numéro de dépôt international: PCT/FR2001/003719
(87) Numéro de publication internationale: WO 2002/044000

(56) Documents cités:
- WO-A-00/03903
- FR-A- 2 774 345
- US-A- 5 921 084

## Description

L'invention est relative à un dispositif de freinage assisté, pour véhicule à moteur, du type de ceux qui comprennent un maître-cylindre commandant la pression dans au moins un circuit de freinage, un piston primaire monté coulissant dans le maître-cylindre pour y créer une variation de pression, ce piston primaire étant soumis à une force d'actionnement se composant d'une force d'entrée exercée par un organe de commande manuelle, généralement constitué par une pédale de frein, et une force d'assistance exercée par un servomoteur d'assistance qui est couplé à l'organe de commande manuelle.

Le servomoteur d'assistance peut être pneumatique et comprendre une enveloppe rigide séparée en deux chambres pneumatiques par une cloison mobile qui peut être soumise à une différence de pression entre les chambres sous l'action d'une valve actionnée par l'organe de commande manuelle.

Un dispositif de freinage de ce type est connu, par exemple d'après EP-B- 0 662 894, et WO 00/03903.

Les conditions dans lesquelles le freinage est exercé peuvent différer Un premier cas correspond à des conditions ordinaires lorsqu'un obstacle est vu de loin et que le freinage est exercé relativement doucement ; ce freinage est appelé "freinage lent". Un autre cas est celui d'un freinage brusque ou "freinage d'urgence", par exemple lorsqu'un obstacle surgit brutalement devant le conducteur qui doit arrêter son véhicule le plus vite possible.

En vue de satisfaire à ces différentes conditions de freinage , un dispositif de freinage assisté, du type défini précédemment, a été complété par une valve d'assistance d'urgence propre à faire intervenir au moins deux rapports d'assistance correspondant respectivement à un freinage lent et à un freinage d'urgence le rapport d'assistance pour le freinage lent est plus faible et la réaction opposée à l'avance de l'organe de commande manuelle est plus forte. Pour le freinage d'urgence, le rapport d'assistance est plus fort et la réaction à l'encontre de l'organe de commande manuelle est plus faible, de sorte que le conducteur peut freiner plus longtemps et plus fort.

Par convention, dans la suite du texte on désignera par le terme "avant" un sens orienté depuis l'organe de commande vers le maître-cylindre, et par le terme "arrière" le sens opposé.

La valve d'assistance d'urgence comporte un piston de réaction qui coulisse de manière étanche à l'arrière d' un alésage du piston primaire, la partie avant de cet alésage communiquant avec le volume intérieur du maître-cylindre, le piston de réaction comportant un passage axial traversé par une commande de rapport qui comporte à son extrémité avant une tête située dans une chambre comprise entre le piston de réaction et une douille logée plus en avant dans l'alésage du piston primaire, cette douille comportant un passage axial dans lequel peut coulisser un piston rapide de section inférieure à celle du piston de réaction, lequel piston rapide comporte aussi un passage axial qui débouche à chaque extrémité, l'extrémité arrière du piston rapide et la tête de la commande de rapport formant un clapet apte à fermer l'entrée du passage du piston rapide.

Le rapport d'assistance lent fait intervenir le piston de réaction, de plus forte section ; le freinage d'urgence fait intervenir le piston rapide de section plus faible.

Il est apparu qu'un tel dispositif de freinage, équipé d'une valve d'assistance d'urgence, tout en donnant entière satisfaction au point de vue fonctionnement et effort de freinage, engendre du bruit notamment en fin de freinage lent.

L'invention a pour but, surtout, de fournir un dispositif de freinage du type défini précédemment, équipé d'une valve d'assistance d'urgence, dans lequel l'inconvénient évoqué ci-dessus ne se produit plus, ou tout au moins n'intervient qu'à un degré moindre. Il est souhaitable, en outre, que la solution proposée reste simple et économique.

Selon l'invention, un dispositif de freinage assisté pour véhicule à moteur, équipé d'une valve d'assistance d'urgence, du type défini précédemment, est caractérisé par le fait qu'il comporte un moyen pour limiter la différence de pression entre d'une part la chambre comprise entre le piston de réaction et la douille et, d'autre part, la zone de l'alésage du piston primaire située en avant de la douille, à une valeur inférieure à celle qui peut provoquer l'ouverture du clapet formé par la tête de la commande de rapport et l'extrémité arrière du piston rapide.

Avant de trouver la solution, les inventeurs ont dû trouver la source du bruit en question. Les inventeurs ont pu établir que ce bruit se produisait dans des conditions de freinage lent au-delà de la force d'assistance maximale que peut fournir le servomoteur, c'est à dire au-delà de la "saturation" définie, plus loin, et qu'il était dû à un écoulement brusque de fluide suite à l' ouverture brutale du clapet. Selon l'invention, cette ouverture intempestive du clapet est évitée et le bruit est supprimé. En outre, le clapet se trouve moins souvent sollicité, et sa durée de vie est augmentée.

Suivant une première possibilité, le moyen pour limiter la différence de pression consiste en un montage coulissant étanche de la douille dans l'alésage du piston primaire. Avantageusement, une butée fixe, notamment une bague ancrée dans la paroi de l'alésage du piston primaire, est prévue pour retenir la douille du côté tourné vers le piston de réaction, tandis que de l'autre côté la douille est soumise à l'action d'un ressort.

Selon une variante, la douille est bloquée axialement dans l'alésage du piston primaire, et le moyen pour limiter la différence de pression comprend une conduite de liaison entre la chambre et la zone située en avant de la douille, cette conduite de liaison comportant un clapet anti-retour taré à une valeur permettant un écoulement sans bruit perceptible dans le sens chambre-zone avant.

Selon une autre variante, une bague en mousse compressible est disposée dans la chambre, cette bague étant propre à diminuer de volume à partir d'une pression limite déterminée, inférieure à la valeur limite acceptable pour éviter l'ouverture du clapet.

L' invention consiste, mises à part les dispositions exposées ci-dessus, en un certain nombre d'autres dispositions dont il sera plus explicitement question ci-après à propos d'exemples de réalisation décrits en détail avec référence aux dessins ci-annexés, mais qui ne sont nullement limitatifs. Sur ces dessins :
Fig.1 est une vue partielle en coupe avec parties arrachées, d'un dispositif de freinage selon l'invention;
Fig.2 est une représentation graphique de la variation de la pression de freinage portée en ordonnée en fonction de la force d'entrée exercée sur la pédale de frein, portée en abscisse;
Fig.3 est une vue partielle en coupe, à plus grande échelle, d' éléments de Fig.1 au cours d'un freinage lent avant saturation;
Fig. 4 est une coupe axiale, à plus grande échelle, d'éléments de Fig.3 en cours de freinage lent après saturation;
Fig.5, enfin, représente schématiquement une variante de réalisation.

La structure d'ensemble et le fonctionnement général d'un dispositif de freinage assisté du type de l'invention sont connus, notamment d'après les brevets EP-B-0 662 894 ou FR-B-2 658 466, et ne seront que succinctement rappelés. Pour plus de détails on pourra se reporter aux deux brevets cités.

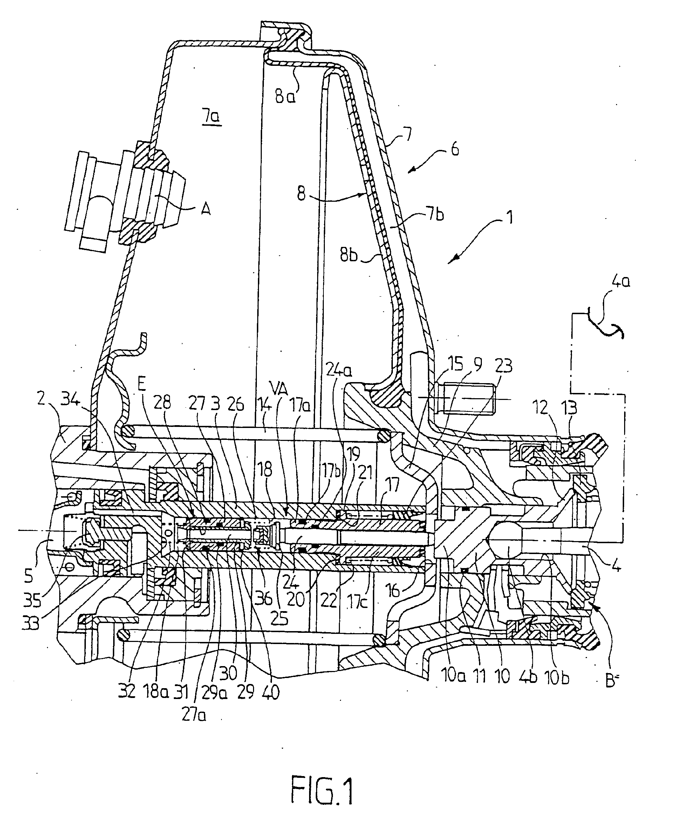

Sur Fig. 1, on peut voir un dispositif de freinage 1 pour véhicule automobile qui comprend un maître-cylindre 2 partiellement représenté et un piston primaire 3 monté coulissant dans le maître-cylindre 2. Un organe de commande manuelle 4 constitué par une tringle coaxiale au piston primaire 3 est prévu pour exercer sur ce piston une force d'entrée de l'arrière vers l'avant, c'est à dire de la droite vers la gauche selon la représentation de Fig.1. Le déplacement du piston primaire 3 vers l'avant crée une augmentation de pression du liquide dans le volume intérieur 5 du maître-cylindre 2, relié à au moins un circuit hydraulique de freinage. L'organe de commande 4 est généralement actionné par une pédale de frein 4a schématiquement représentée.

Un servomoteur d'assistance 6 pneumatique est couplé à l'organe de commande 4. Le servomoteur 6 comprend une enveloppe rigide 7 séparée intérieurement de manière étanche en deux chambres pneumatiques 7a, 7b par une cloison mobile 8 comprenant une membrane 8a en matière élastomère et une jupe rigide 8b. La chambre 7a est reliée en permanence à une source de dépression (non représentée) par un ajutage A. Un piston pneumatique 9 en forme de manchon coaxial au piston primaire 3 est fixé à la jupe rigide 8b. Le piston pneumatique 9 est monté coulissant sur un distributeur plongeur 10 de manière étanche grâce à un joint torique 11. Le distributeur plongeur 10 comporte vers l'avant un prolongement 10a de plus faible diamètre, et vers l'arrière un logement borgne axial 10b, ouvert vers l'arrière, qui reçoit une rotule 4b prévue à l'extrémité de la tringle 4.

Le distributeur plongeur 10 comporte, du côté opposé au piston 3, un épanouissement tronconique 12 qui peut venir en appui de manière étanche contre une bague 13 en matière élastomère liée en translation axiale au piston pneumatique 9. L' ensemble 12, 13 constitue une partie d'une valve trois voies B (partiellement représentée) qui permet soit d'isoler la chambre 7b de l'atmosphère et de mettre en communication les chambres 7a,7b, soit d'isoler les chambres 7a,7b l'une de l'autre et d'admettre de l'air à pression atmosphérique dans la chambre 7b lorsque l'épanouissement 12 s'écarte axialement de la bague 13.

Le piston pneumatique 9 est rappelé vers sa position de repos, représentée sur Fig.1, par un ressort de compression 14 disposé entre le piston 9 et la paroi opposée de l'enveloppe 7 sur laquelle est fixée le maître-cylindre 2. Une cuvette 15 comportant une ouverture centrale 16 est en appui axial par son bord périphérique extérieur contre un épaulement du piston pneumatique 9. Le ressort 14 applique le bord de cette cuvette contre le piston 9. La cuvette 15 est en appui axial, par le bord intérieur entourant son ouverture 16, contre l'extrémité arrière du piston primaire 3. Le prolongement 10a du distributeur plongeur 10 peut traverser librement l'ouverture 16.

Une valve d'assistance d'urgence VA est prévue pour faire intervenir au moins deux rapports d'assistance correspondant respectivement à un freinage lent, et à un freinage d'urgence.

La valve VA comprend un piston de réaction 17 dont une partie avant 17a, de plus faible diamètre, coulisse de manière étanche, grâce à un joint torique 17b, dans un alésage axial 18 du piston primaire 3. La partie arrière 17c du piston de réaction présente un plus fort diamètre et comporte une collerette 19 qui peut coulisser dans une zone arrière de plus grand diamètre de l'alésage 18 du piston primaire 3. Une bague de matière élastique 20 est disposée contre la collerette 19, du même côté que la partie 17a. Cette bague 20 peut venir en appui axial contre un épaulement 21 du piston primaire 3. De l'autre côté, la collerette 19 sert d'appui axial à un ressort hélicoïdal de compression 22 précontraint, appelé ressort de saut. A son autre extrémité arrière, le ressort 22 est en appui contre une bague encliquetable 23 en matière plastique, ancrée au piston primaire 3 et dans laquelle coulisse la partie arrière 17c du piston de réaction.

Le piston de réaction 17 comporte un alésage axial dans lequel une commande de rapport 24 est montée coulissante de manière étanche grâce à un joint torique 24a. L'extrémité arrière de la commande de rapport 24 est en appui contre le prolongement 10a du distributeur plongeur 10. L'extrémité avant de la commande de rapport 24 comporte une tête 25 située dans une chambre 26, de l'alésage 18, comprise entre le piston de réaction 17 et une douille 27 logée plus en avant dans l'alésage 18.

La douille 27 comporte un alésage axial 28 qui la traverse complètement et dans lequel un piston rapide 29 est monté coulissant, de manière étanche grâce à un joint torique 29a . Le diamètre extérieur du piston rapide 29 est plus petit que celui de la partie 17a du piston de réaction. Le piston rapide 29 est traversé axialement par un passage 30 qui débouche à chaque extrémité. L'extrémité avant du piston rapide 29 est en appui contre une bague 31 poussée élastiquement par un ressort 32 contre la douille 27. Le ressort 32 prend appui, de l'autre côté, contre une paroi de fond 33 située à l'avant de l'alésage 18 . La zone avant 18a de l'alésage 18, dans laquelle est logé le ressort 32, communique par un canal 34 avec le volume intérieur 5 du maître cylindre 2 . Le ressort 32 est soumis à une précontrainte inférieure à celle du ressort 22. Un clapet 35 est en outre prévu pour permettre, lorsque le volume 5 n'est plus sous pression, une réalimentation de ce volume en liquide à partir d'un réservoir (non représenté).

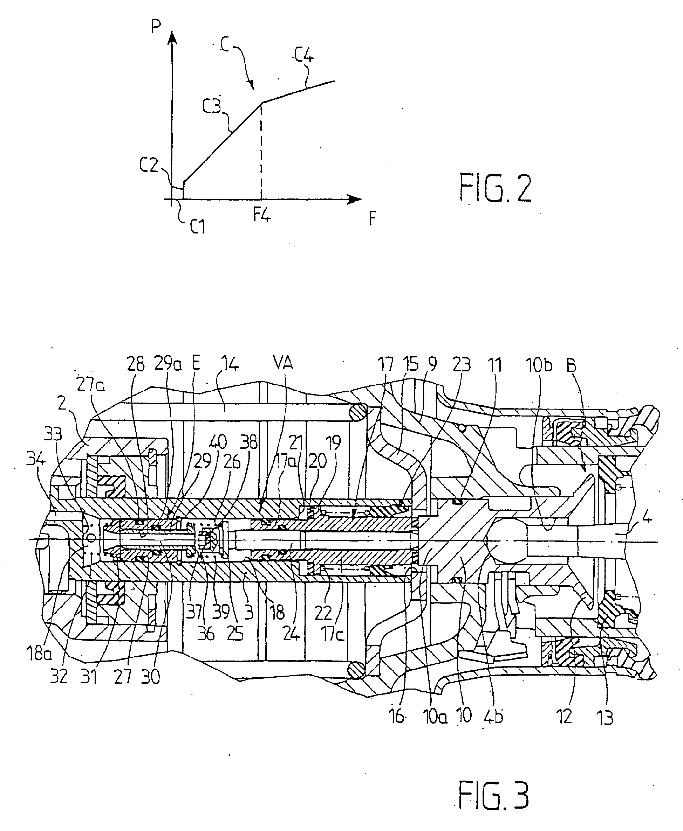

L'extrémité arrière du piston rapide 29 est située dans la chambre 26, au voisinage de la tête 25 de la commande de rapport 24. Cette extrémité arrière du piston rapide 29 forme, avec la tête 25, un clapet 36 qui comprend, par exemple, une portée annulaire 37. (Fig.3) sur la face d'extrémité du piston rapide 29 et un bouchon 38, en matière élastomère, fixé dans la tête 25, dont une partie fait saillie relativement à la tête, cette partie présentant un bord périphérique annulaire propre à s'appliquer de manière étanche contre la portée 37. Un ressort 39 de compression est disposé entre deux épaulements, prévus respectivement sur le piston 29 et sur la tête 25, pour ouvrir le clapet 36 au repos.

Selon l'invention, un moyen E est prévu pour limiter la différence de pression entre la chambre 26 et la zone 18a, située du côté de la douille 27 opposé à la chambre 26, à une valeur telle que le clapet 36 ne peut s'ouvrir dans un cas de freinage lent, au-delà de la saturation. De préférence la différence de pression est limitée à une valeur inférieure à 5 bars.

Avant de poursuivre la description , on se reporte à Fig.2 pour préciser l'expression " saturation".

La courbe C de Fig.2 représente, en ordonnée, la pression de freinage P, ou pression hydraulique dans le volume 5, en fonction de la force d'entrée F exercée sur l'organe de commande 4 suivant la direction axiale. La courbe C comprend une première partie horizontale d'ordonnée nulle C1 qui correspond à la course de la tringle 4 pour la commande de la vanne trois voies B.

C1 est suivie d'un segment vertical C2 appelé "saut" qui correspond à une phase de compression du ressort 22 par le piston de réaction 17, suite à l'augmentation de la pression du liquide dans le maître-cylindre 2 en raison de la force d'assistance exercée par le servomoteur sur le piston primaire 3. Le piston de réaction 17 recule jusqu'à venir en butée contre le prolongement 10a.

La courbe C se poursuit par un segment C3 à forte pente qui correspond à l'action conjuguée de l'organe de commande 4 et du servomoteur d'assistance 7 sur le piston primaire 3. La saturation se produit lorsque l'effort d'assistance du servomoteur 6 a atteint sa valeur maximale, c'est-à-dire lorsque la différence de pression entre les deux chambres 8a, 8b, ne peut plus augmenter ; cette situation correspond au point d'abscisse F4. La courbe C se poursuit par un segment C4 de pente plus faible que celle du segment C3 car l'augmentation de la pression P est due à la seule augmentation de la force d'entrée manuelle exercée sur l'organe 4.

Selon une première possibilité, le moyen E pour limiter la différence de pression entre la chambre 26 et la zone 18a réside dans un montage coulissant de la douille 27 à l'intérieur de l'alésage 18. La douille 27 coulisse de manière étanche grâce à un joint torique 27a. Une bague fendue élastique 40 est ancrée dans une gorge de l'alésage 18, en arrière de la douille 27, pour servir de butée axiale à cette douille 27 poussée par le ressort 32.

Le montage coulissant de la douille 27 permet à cette dernière de se déplacer vers l'avant, c'est-à-dire dans un sens assurant une augmentation du volume de la chambre 26 et donc une diminution de la pression dans cette chambre.

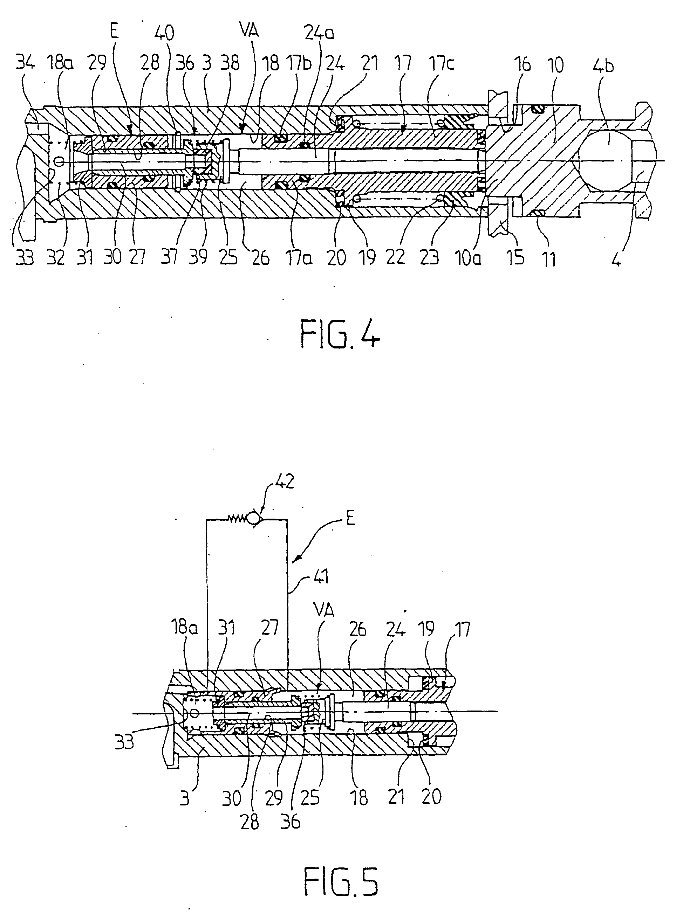

Selon une variante représentée schématiquement sur Fig.5, la douille 27 est bloquée axialement dans l'alésage 18 et le moyen E pour limiter la différence de pression entre la chambre 26 et la zone 18a comprend une canalisation de liaison 41 entre ces deux espaces munie d'un clapet anti-retour 42 propre à laisser passer du liquide de la chambre 26 vers la zone 18a . Le clapet 42 est taré à une valeur de pression suffisamment faible, de préférence inférieure à 5 bars, pour que l'écoulement de liquide se produise sans bruit perceptible.

Selon une autre variante non représentée, une bague en mousse alvéolée précomprimée, propre à ne s'écraser qu' à partir d'une certaine pression limite, par exemple de l'ordre de 80 bars, est prévue dans la chambre 26 pour permettre, par son écrasement à partir de la pression limite, une augmentation du volume disponible pour le liquide dans cette chambre 26.

Ceci étant, le fonctionnement du dispositif de freinage assisté selon l'invention est le suivant dans le cas d'un freinage lent.

L'organe de commande manuelle 4 est déplacé, relativement lentement, vers la gauche. La valve B est actionnée et coupe la communication entre les chambres 7a et 7b, puis l'épanouissement tronconique 12 s'écarte de la bague élastique 13 ce qui assure l'admission d'air à pression atmosphérique dans la chambre 7b du servomoteur pneumatique 6. La cloison mobile 8 transmet la force d'assistance au piston pneumatique 9 qui se déplace vers l'avant à l'encontre du ressort 14. Le piston 9 entraîne la cuvette 15 qui pousse le piston primaire 3 vers l'avant. La pression du liquide augmente dans le volume 5 ainsi que dans la chambre 26 car le clapet 36 est ouvert. La pression engendre sur le piston de réaction 17 un effort vers l'arrière. Lorsque cet effort atteint et dépasse la précontrainte du ressort 22, le piston de réaction 17 recule jusqu'à venir en butée contre le prolongement 10a comme illustré sur Fig.3. Le saut C2 (Fig.2) s'est produit.

Sous l'action de la force d'entrée sur l'organe 4, le distributeur plongeur 10 continue son déplacement vers l'avant; le piston pneumatique 9 suit le distributeur plongeur 10 et pousse le piston primaire 3 avec la force d'assistance. La pression du liquide dans le volume 5 continue à augmenter, ainsi que dans la chambre 26.

Lorsque la saturation est atteinte, le servomoteur d'assistance 6 produit son effort d'assistance maximal. Le piston primaire 3 marque un bref temps d'arrêt car la force exercée vers l'arrière par la pression P équilibre la force d'assistance.

L'organe de commande 4 continue à avancer sous l'action de la force d'entrée manuelle. La commande de rapport 24 avance relativement au piston primaire 3, et la tête 25 par son bouchon 38 s'applique contre la portée 37 du piston rapide 29. Le clapet 36 se ferme. Le piston de réaction 17 en appui contre le prolongement 10a avance également relativement au piston primaire 3 jusqu'à ce que la bague 20 vienne en butée contre l'épaulement 21 du piston primaire 3 comme illustré sur Fig.4. La poursuite de la force d'entrée sur l'organe de commande 4 permet d'entraîner, par l'intermédiaire du piston de réaction 17, le piston primaire 3 et d'assurer l'augmentation de la pression de freinage.

Lors du mouvement d'avance du piston de réaction 17 relativement au piston primaire 3, le volume de la chambre 26 a tendance à diminuer, ce qui provoque dans cette chambre 26 une augmentation de pression qui, si elle devenait trop forte, provoquerait une ouverture brusque du clapet 36 et le bruit, mentionné au début de la description, par écoulement brutal.

Cet écoulement intempestif est évité, selon l'invention, car la douille 27 se déplace vers l'avant en comprimant le ressort 32 lorsque la pression augmente dans la chambre 26. La pression dans la chambre 26 est ainsi maintenue à une valeur limitée qui ne provoque pas l'ouverture du clapet 36 ; de préférence la différence de pression entre la chambre 26 et la zone 18a est limitée à une valeur inférieure à 5 bars.

Selon la variante de Fig.5 la douille 27 est bloquée dans l'alésage 28 mais le clapet 42 permet un écoulement de liquide de la chambre 26 vers la zone 18a sous une pression suffisamment réduite pour qu'aucun bruit ne soit perceptible; de préférence la différence de pression entre la chambre.26 et la zone 18a est limitée à une valeur inférieure à 5 bars.

Le fonctionnement en freinage rapide n'est pas modifié. Dès le début d'un freinage rapide la bague 20 vient et reste en appui contre l'épaulement 21 du piston primaire 3.

Lorsque le conducteur relâche le pied de la pédale de frein 4a, la valve B d'une part se ferme au niveau de 12 et 13, et d'autre part permet le rétablissement de l'équilibre des pressions entre les chambres 7a, 7b ce qui annule l'action du servomoteur 6 et assure la cessation du freinage et le retour à la position repos.

Bien que la description ait été effectuée avec un servomoteur d' assistance pneumatique, le servomoteur pourrait être hydraulique, mais avec une saturation correspondant à une assistance maximale.

## Revendications

1. Dispositif de freinage assisté, pour véhicule à moteur, comprenant un maître-cylindre (2) commandant la pression dans au moins un circuit de freinage, un piston primaire (3) monté coulissant dans le maître-cylindre pour y créer une variation de pression, ce piston primaire (3) étant soumis à une force d'actionnement se composant d'une force d'entrée exercée par un organe de commande manuelle (4) et une force d'assistance exercée par un servomoteur d'assistance (6) qui est couplé à l'organe de commande manuelle (4), et une valve d'assistance d'urgence (VA) comportant un piston de réaction (17) qui coulisse de manière étanche à l'arrière d' un alésage (18) du piston primaire (3), la partie avant (18a) de cet alésage communiquant avec le volume intérieur (5) du maître-cylindre, le piston de réaction (17) comportant un passage axial traversé par une commande de rapport (24) qui comporte à son extrémité avant une tête (25) située dans une chambre (26) comprise entre le piston de réaction (17) et une douille (27) logée plus en avant dans l'alésage du piston primaire, cette douille (27) comportant un passage axial (28) dans lequel peut coulisser un piston rapide (29) de section inférieure à celle du piston de réaction, lequel piston rapide comporte aussi un passage axial (30) qui débouche à chaque extrémité, l'extrémité arrière du piston rapide et la tête de la commande de rapport formant un clapet (36) apte à fermer l'entrée du passage (30) du piston rapide,
**caractérisé par le fait qu'**il comporte un moyen (E) pour limiter la différence de pression entre d'une part la chambre (26) comprise entre le piston de réaction (17) et la douille (27) et, d'autre part, la zone (18a) de l'alésage du piston primaire située en avant de la douille (27), à une valeur inférieure à celle qui peut provoquer l'ouverture du clapet (36) formé par la tête de la commande de rapport et l'extrémité arrière du piston rapide.

2. Dispositif de freinage assisté selon la revendication 1, **caractérisé par le fait que** le moyen (E) est apte à limiter la différence de pression entre la chambre (26) et la zone (18a) à une valeur inférieure à 5 bars.

3. Dispositif de freinage assisté selon la revendication 1 ou 2, **caractérisé par le fait que** le moyen (E) pour limiter la différence de pression consiste en un montage coulissant de la douille (27) dans l'alésage (18) du piston primaire (3).

4. Dispositif de freinage assisté selon la revendication 3, **caractérisé par le fait que** le montage coulissant de la douille (27) dans l'alésage (18) est étanche grâce à un joint (27a).

5. Dispositif de freinage assisté selon la revendication 3 ou 4, **caractérisé par le fait qu'**une butée fixe (40) est prévue derrière la douille (27) pour la retenir du côté tourné vers le piston de réaction (17), tandis que de l'autre côté la douille est soumise à l'action d'un ressort (32).

6. Dispositif de freinage assisté selon la revendication 5, **caractérisé par le fait que** la butée fixe est formée par une bague (40) ancrée dans la paroi (18) de l'alésage du piston primaire.

7. Dispositif de freinage assisté selon la revendication 1 ou 2, **caractérisé par le fait que** la douille (27) est bloquée axialement dans l'alésage (18) du piston primaire (3) et le moyen (E) pour limiter la différence de pression comprend une conduite de liaison (41) entre la chambre (26) et la zone (18a) en avant de la douille, cette conduite de liaison comportant un clapet anti-retour (42) taré à une valeur permettant un écoulement sans bruit perceptible dans le sens chambre-zone avant.

8. Dispositif de freinage assisté selon la revendication 7, **caractérisé par le fait que** le clapet anti-retour (42) est taré à une valeur inférieure à 5 bars.

9. Dispositif de freinage assisté selon la revendication 1 ou 2, **caractérisé par le fait qu'** une bague en mousse compressible est disposée dans la chambre (26), cette bague étant propre à diminuer de volume à partir d'une pression déterminée, inférieure à une valeur limite acceptable pour éviter l'ouverture du clapet (36).

## Claims

1. Boosted braking device, for a motor vehicle, comprising a master cylinder (2) controlling the pressure in at least one brake circuit, a primary piston (3) mounted to slide in the master cylinder to create a pressure variation therein, this primary piston (3) being subjected to an actuating force made up of an input force exerted by a manual-control member (4) and a boost force exerted by a booster (6) which is coupled to the manual-control member (4), and an emergency assist valve (VA) comprising a reaction piston (17) which slides in a sealed manner at the rear of a bore (18) of the primary piston (3), the front part (18a) of this bore communicating with the interior volume (5) of the master cylinder, the reaction piston (17) comprising an axial passage through which there passes a ratio control (24) which at its front end has a head (25) located in a chamber (26) lying between the reaction piston (17) and a bushing (27) housed further forward in the bore of the primary piston, this bushing (27) having an axial passage (28) in which a rapid piston (29) of cross section smaller than that of the reaction piston can slide, which rapid piston also has an axial passage (30) open at each end, the rear end of the rapid piston and the head of the ratio control forming a valve (36) capable of shutting off the inlet to the passage (30) of the rapid piston,
**characterized in that** it comprises a means (E) for limiting the pressure difference between, on the one hand, the chamber (26) lying between the reaction piston (17) and the bushing (27) and, on the other hand, the zone (18a) of the bore of the primary piston which is situated forward of the bushing (27), to a value below the one which can cause the valve (36) formed by the head of the ratio control and the rear end of the rapid piston to open.

2. Boosted braking device according to Claim 1, **characterized in that** the means (E) is capable of limiting the pressure difference between the chamber (26) and the zone (18a) to a value of below 5 bar.

3. Boosted braking device according to Claim 1 or 2, **characterized in that** the means (E) for limiting the pressure difference consists in mounting the bushing (27) so that it can slide in the bore (18) of the primary piston (3).

4. Boosted braking device according to Claim 3, **characterized in that** a seal (27a) is used to make the sliding mounting of the bushing (27) in the bore (18) leaktight.

5. Boosted braking device according to Claim 3 or 4, **characterized in that** a fixed stop (40) is provided behind the bushing (27) to retain it on the side facing toward the reaction piston (17), while the other side of the bushing is subjected to the action of a spring (32).

6. Boosted braking device according to Claim 5, **characterized in that** the fixed stop is formed by a ring (40) anchored in the wall (18) of the bore of the primary piston.

7. Boosted braking device according to Claim 1 or 2, **characterized in that** the bushing (27) is axially immobilized in the bore (18) of the primary piston (3) and the means (E) for limiting the pressure difference comprises a connecting duct (41) connecting between the chamber (26) and the zone (18a) forward of the bushing, this connecting duct comprising a non-return valve (42) rated at a value that allows flow without perceptible noise in the chamber-front zone direction.

8. Boosted braking device according to Claim 7, **characterized in that** the non-return valve (42) is rated at a value of below 5 bar.

9. Boosted braking device according to Claim 1 or 2, **characterized in that** a compressible foam ring is placed in the chamber (26), this ring being capable of reducing in volume once a given pressure is reached, this pressure being lower than a limiting value that is acceptable for avoiding the opening of the valve (36).

## Patentansprüche

1. Vorrichtung für eine unterstützte Bremsung für ein Kraftfahrzeug, mit einem Hauptzylinder (2), der den Druck in mindestens einem Bremskreis steuert, einem Primärkolben (3), der im Hauptzylinder gleitend angebracht ist, um dort eine Druckänderung zu erzeugen, wobei dieser Primärkolben (3) einer Betätigungskraft ausgesetzt ist, die sich aus einer Eingangskraft, die von einem Organ (4) zur manuellen Steuerung ausgeübt wird, und einer Unterstützungskraft zusammensetzt, die von einem an das Organ (4) zur manuellen Steuerung gekoppelten Unterstützungsservomotor (6) ausgeübt wird, und mit einem Unterstützungsnotventil (VA), das einen Reaktionskolben (17) aufweist, der in dichter Weise im hinteren Teil einer Bohrung (18) des Primärkolbens (3) gleitet, wobei der vordere Teil (18a) dieser Bohrung mit dem Innenvolumen (5) des Hauptzylinders verbunden ist, wobei der Reaktionskolben (17) einen axialen Durchgang aufweist, durch den eine Verhältnissteuerung (24) verläuft, die an ihrem vorderen Ende einen Kopf (25) aufweist, der in einer Kammer (26) liegt, die zwischen dem Reaktionskolben (17) und einer Hülse (27) ausgebildet ist, welche weiter vorne in der Bohrung des Primärkolbens angeordnet ist, wobei diese Hülse (27) einen axialen Durchgang (28) aufweist, in dem ein schneller Kolben (29) gleiten kann, dessen Querschnitt kleiner ist als der des Reaktionskolbens, wobei der schnelle Kolben auch einen axialen Durchgang (30) aufweist, der an jedem Ende mündet, wobei das hintere Ende des schnellen Kolbens und der Kopf der Verhältnissteuerung ein Ventilelement (36) bilden, das den Eingang des Durchgangs (30) des schnellen Kolbens verschließen kann, **dadurch gekennzeichnet, dass** sie ein Mittel (E) aufweist, um die Druckdifferenz zwischen der Kammer (26) einerseits, die zwischen dem Reaktionskolben (17) und der Hülse (27) ausgebildet ist, und dem Bereich (18a) der Bohrung des Primärkolbens andererseits, der vor der Hülse (27) liegt, auf einen Wert zu begrenzen, der kleiner ist als der Wert, der das Öffnen des Ventilelements (36) bewirken kann, das durch den Kopf der Verhältnissteuerung und dem hinteren Ende des schnellen Kolbens gebildet ist.

2. Vorrichtung für eine unterstützte Bremsung nach Anspruch 1, **dadurch gekennzeichnet, dass** das Mittel (E) die Druckdifferenz zwischen der Kammer (26) und dem Bereich (18a) auf einen Wert von weniger als 5 Bar begrenzen kann.

3. Vorrichtung für eine unterstützte Bremsung nach Anspruch 1 oder 2, **dadurch gekennzeichnet, dass** das Mittel (E) zur Begrenzung der Druckdifferenz aus einer gleitenden Lagerung der Hülse (27) in der Bohrung (18) des Primärkolbens (3) besteht.

4. Vorrichtung für eine unterstützte Bremsung nach Anspruch 3, **dadurch gekennzeichnet, dass** die gleitende Lagerung der Hülse (27) in der Bohrung (18) aufgrund einer Dichtung (27a) dicht ist.

5. Vorrichtung für eine unterstützte Bremsung nach Anspruch 3 oder 4, **dadurch gekennzeichnet, dass** hinter der Hülse (27) ein fester Anschlag (40) vorgesehen ist, um diese auf der dem Reaktionskolben (17) zugewandten Seite zu halten, während die Hülse auf der andere Seite der Wirkung einer Feder (32) ausgesetzt ist.

6. Vorrichtung für eine unterstützte Bremsung nach Anspruch 5, **dadurch gekennzeichnet, dass** der feste Anschlag durch einen Ring (40) gebildet ist, der in der Wand (18) der Bohrung des Primärkolbens verankert ist.

7. Vorrichtung für eine unterstützte Bremsung nach Anspruch 1 oder 2, **dadurch gekennzeichnet, dass** die Hülse (27) in der Bohrung (18) des Primärkolbens (3) axial blockiert ist und das Mittel (E) zur Begrenzung der Druckdifferenz eine Verbindungsleitung (41) zwischen der Kammer (26) und dem Bereich (18a) vor der Hülse aufweist, wobei diese Verbindungsleitung ein Rückschlagventil (42) aufweist, das auf einen Wert austariert ist, bei dem ein Strömen ohne wahrnehmbare Geräusche in Richtung von der Kammer zum vorderen Bereich möglich ist.

8. Vorrichtung für eine unterstützte Bremsung nach Anspruch 7, **dadurch gekennzeichnet, dass** das Rückschlagventil (42) auf einen Wert von weniger als 5 Bar austariert ist.

9. Vorrichtung für eine unterstützte Bremsung nach Anspruch 1 oder 2, **dadurch gekennzeichnet, dass** ein Ring aus komprimierbarem Schaum in der Kammer (26) angeordnet ist, wobei das Volumen dieses Rings dazu geeignet ist, sich ab einem vorbestimmten Druck zu verringern, der kleiner ist als ein Grenzwert, welcher zur Vermeidung des Öffnens des Ventilelements (36) akzeptabel ist.
